(19) Europäisches Patentamt / European Patent Office / Office européen des brevets

(11) **EP 2 847 540 B1**

(12) # EUROPÄISCHE PATENTSCHRIFT

(45) Veröffentlichungstag und Bekanntmachung des Hinweises auf die Patenterteilung:
**14.09.2016  Patentblatt 2016/37**

(51) Int Cl.:
**G01B 11/00** (2006.01)   **G01B 21/04** (2006.01)
**G02B 21/06** (2006.01)

(21) Anmeldenummer: **12719704.4**

(22) Anmeldetag: **07.05.2012**

(86) Internationale Anmeldenummer:
**PCT/EP2012/058394**

(87) Internationale Veröffentlichungsnummer:
**WO 2013/167168 (14.11.2013 Gazette 2013/46)**

(54) **VERBESSERTES BELEUCHTUNGSMODUL FÜR EIN KOORDINATENMESSGERÄT**

IMPROVED ILLUMINATION MODULE FOR A CO-ORDINATE MEASURING MACHINE

MODULE D'ÉCLAIRAGE AMÉLIORÉ POUR UN APPAREIL DE MESURE DE COORDONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2015  Patentblatt 2015/12**

(73) Patentinhaber: **Carl Zeiss Industrielle Messtechnik GmbH**
**73447 Oberkochen (DE)**

(72) Erfinder: **ENGEL, Thomas**
**73432 Aalen (DE)**

(74) Vertreter: **Witte, Weller & Partner Patentanwälte mbB**
**Postfach 10 54 62**
**70047 Stuttgart (DE)**

(56) Entgegenhaltungen:
**EP-A2- 0 385 262      EP-A2- 0 969 304**
**EP-B1- 1 373 827      DE-A1-102006 018 410**
**DE-A1-102009 009 599**

## Beschreibung

Die vorliegende Erfindung betrifft ein Beleuchtungsmodul für ein Koordinatenmessgerät zum Vermessen eines Werkstücks mittels eines optischen Sensors, wobei das Beleuchtungsmodul einen Grundkörper mit einer Sensorseite und einer Werkstückseite aufweist, wobei das Beleuchtungsmodul an dem Grundkörper mindestens eine Beleuchtungsanordnung zum Beleuchten des Werkstücks aufweist, und wobei die mindestens eine Beleuchtungsanordnung eine Abstrahlcharakteristik mit einem bestimmten Abstrahlwinkel und einem Lichtintensitätsverlauf innerhalb des Abstrahlwinkels aufweist.

Gemäß einem zweiten Aspekt betrifft die vorliegende Erfindung Koordinatenmessgerät zum Vermessen eines Werkstücks mittels eines optischen Sensors.

Beleuchtungsmodule für Koordinatenmessgeräte sind beispielsweise aus der Druckschrift EP 0 362 625 A2 bekannt.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen.

Sensorsysteme mit optischen Sensoren finden in der Koordinatenmesstechnik zunehmend Bedeutung. Dabei zeichnen sich optische Sensoren insbesondere durch eine hohe Geschwindigkeit des Messvorgangs aus. Auf diese Weise lassen sich viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Klassischerweise ist der optische Sensorkopf bzw. der optische Sensor mit einem Trägersystem verbunden, welches das optische Sensorsystem stützt und bewegt. Im Stand der Technik sind verschiedene Trägersysteme bekannt, beispielsweise Portalsysteme, Ständer-, Horizontalarm- und Armsysteme, und alle Arten von Robotersystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Des Weiteren ist es in der Koordinatenmesstechnik üblich, dass bei der Vermessung von Objekten mit unterschiedlichen Beleuchtungsarten gearbeitet werden kann. Die entsprechenden optischen Sensoren weisen dann eine Videokamera und/oder eine Bildkamera und eine entsprechende Beleuchtung für das Werkstück auf. Des Weiteren ist eine feste Abbildungsoptik vorgesehen, die das zu vermessende Werkstück auf die Kamera bzw. die optischen Sensoren der Kamera abbildet. Für jeden Anwendungsfall bzw. jede Messart sind dabei in der Regel spezifische optische Sensoren mit fest integrierten Beleuchtungen und Abbildungsoptiken vorgesehen.

Beispielsweise zeigt die eingangs genannte Druckschrift EP 0 362 625 A2 eine auswechselbare Frontoptik für einen optischen Tastkopf. Diese Frontoptik ist für einen bestimmten Arbeitsabstand und eine bestimmte Beleuchtungsart ausgebildet. Des Weiteren weist sie das gesamte Objektiv auf, das von dem Werkstück reflektierte Lichtstrahlen auf den optischen Sensor abbildet.

Eine derartige Frontoptik ist jedoch aufgrund der optischen Elemente zum Abbilden relativ schwer und weist ein relativ großes Volumen auf. Des Weiteren ist eine solche Frontoptik nur für einen bestimmten Anwendungsfall, d.h. in einem bestimmten Arbeitsabstand und für eine bestimmte Beleuchtungsart, verwendbar.

Die Druckschrift DE 10 2009 009 599 A1 zeigt ein abbildendes optisches System, das mit einer Einrichtung zur effizienten Beleuchtung eines abzubildenden Objektes ausgestattet ist und eine Lichteintrittsfläche für das von einem Objektiv reflektierte, gestreute oder in Lumineszenz umgewandelte Beleuchtungslicht aufweist.

Des weiteren zeigt die Druckschrift EP 0 969 304 A2 eine Vorsatzoptik für ein, insbesondere faseroptisches, Ringlicht zur Lichtintensitätsverteilung auf einem zum beleuchtenden Objekt, das ein konzentrisch zum Ringlicht, an dessen Lichtaustrittsseite bzw. der der Lichtleitfaser angeordneten ringförmiges optisches Element auf.

Des Weiteren zeigt die Druckschrift DE 10 2006 018 410 A1 eine Einrichtung zur Kontraststeigerung für Ringlichtbeleuchtungen, die zur Auflichtbeleuchtung von zu beobachtenden Objekten in der Mikroskopie, insbesondere in der Stereomikro

In den Druckschriften EP 0 385 262 A2 und EP 1 373 827 B1 sind darüber hinaus ebenfalls Beleuchtungseinrichtungen für Koordinatenmessgeräte angegeben, die zum einen Abbildungsoptiken aufweisen und zum anderen relativ komplex ausgebildete, beispielsweise schwenk- oder bewegbare Beleuchtungselemente aufweisen, um die Beleuchtung auf verschiedene Arbeitsabstände einzustellen. Auch daraus resultiert jedoch ein relativ komplexer Aufbau solcher Beleuchtungselemente sowie ein eventuell höheres Gewicht und Volumen, was aufgrund der damit verbundenen höheren Trägheit das Regeln des optischen Sensorkopfs, insbesondere bei schnellen Messvorgängen, erschwert.

Abhängig von dem zu untersuchenden Werkstück und dem mittels des optischen Sensors angewendeten Messverfahrens ist das Werkstück auf unterschiedliche Arten zu beleuchten. Dabei kann beispielsweise ein Arbeitsabstand, in dem der Messvorgang vorgenommen wird, variieren. Des Weiteren kann unter Umständen eine Beleuchtung mit unterschiedlichen Einfallswinkeln auf eine Oberfläche des Werkstücks gewünscht sein. Daher sind in der Praxis Beleuchtungsmodule entweder zu wechseln oder ein Beleuchtungsmodul weist mehrere, wechselnd schaltbare Lichtquellen auf, um die unterschiedlichen Arten von Beleuchtungen bereitzustellen. Derartige Anordnungen machen ein Beleuchtungsmodul jedoch zum einen schwerer und erhöhen zum anderen die Kosten eines Beleuchtungsmoduls. Es ist jedoch grundsätzlich wünschenswert, mittels eines Beleuchtungsmoduls mehrere Arten von Beleuchtungen bereitstellen zu können, d.h. Beleuchtungen in unterschiedlichen Arbeitsabständen und/oder mit unterschiedlichen Einfallswinkeln.

Es ist daher eine Aufgabe der vorliegenden Erfindung, ein Beleuchtungsmodul für ein Koordinatenmessgerät mit einem optischen Sensor anzugeben, das einfach aufgebaut ist und eine größtmögliche Flexibilität bei der Verwendung des optischen Sensors des Koordinatenmessgeräts ermöglicht, insbesondere eine Verwendung unterschiedlicher Arbeitsabstände.

Erfindungsgemäß wird daher gemäß einem ersten Aspekt vorgeschlagen, das eingangs genannte Beleuchtungsmodul dahingehend weiterzubilden, dass die Abstrahlchärakteristik jeder Beleuchtungsanordnung derart moduliert ist, dass sie einen ersten Teilbereich und einen zweiten Teilbereich aufweist, wobei zwischen dem ersten Teilbereich und dem zweiten Teilbereich ein Schattenbereich ist, und wobei die ersten Teilbereiche der mindestens einen Beleuchtungsanordnung in einem ersten Arbeitsbereich und zweiten Teilbereiche der mindestens einen Beleuchtungsanordnung in einem zweiten Arbeitsbereich zusammenfallen, und dass die mindestens eine Beleuchtungsanordnung jeweils mindestens ein optisches Element aufweist, das die Abstrahlcharakteristik der jeweiligen Beleuchtungsanordnung moduliert.

Die Strahlungsintensität einer Lichtquelle ist der Anteil der gesamten Strahlungsleistung der Lichtquelle in einer gegebenen Raumrichtung in einem beliebig kleinen Raumwinkelelement. Die Strahlungsleistung als SI-Einheit wird somit angegeben zu

$$I = \frac{d\Phi}{d\Omega}$$

wobei I die Strahlungsintensität in Watt (W) pro Steradiant (sr) ist, $\Phi$ die gesamte Strahlungsleistung in Watt und $\Omega$ der Raumwinkel in Steradiant. Ist eine Richtungsverteilungsfunktion einer Lichtquelle bekannt, kann die Strahlungsintensität auch durch multiplizieren mit der gesamten Strahlungsleitung ermittelt werden. Im Falle von Licht spricht man statt Strahlungsintensität auch von "Lichtintensität". In diesem Sinne wird der Begriff im Rahmen der vorliegenden Anmeldung verwendet. Die Lichtintensität beschreibt die ungewichtete Verteilung der Strahlungs- bzw. Lichtleistung über den Raum. Die SI-Einheit "Lichtstärke" beschreibt diese ebenfalls, jedoch gewichtet mit dem Helligkeitsempfinden eines Standardbeobachters. Da vorliegend grundsätzlich auch optische Sensoren und Beleuchtungsanordnungen denkbar sind, die bspw. in einem infraroten Wellenlängenbereich arbeiten, sind photometrische Einheiten, die auf das Helligkeitsempfinden des menschlichen Auges abstellen, jedoch ungeeignet. Im Rahmen der vorliegenden Anmeldung wird die Abstrahlcharakteristik der Beleuchtungsanordnungen daher mit der Verteilung der Lichtintensität beschrieben, um tatsächlich einen reinen energetischen Vergleich zu geben.

Unter dem "Abstrahlwinkel" wird vorliegend der Winkel zwischen den Richtungen verstanden, in denen eine Beleuchtungsanordnung 50% ihrer maximalen Lichtintensität abstrahlt.

Eine der Strahlungsintensität verwandte SI-Einheit ist die Bestrahlungs-stärke, die mit

$$E = \frac{d\Phi}{dA}$$

angegeben wird, wobei I die Bestrahlungsstärke in Watt (W) pro Quadratmeter (m$^2$) ist, $\Phi$ die gesamte Strahlungsleistung in Watt und A die Fläche in Quadratmetern. Die Bestrahlungsstärke lässt sich beispielsweise mittels eines Radiometers messen. Beide Größen sind mittels der Gleichung

$$E = \frac{I}{r^2}$$

ineinander überführbar, wobei r ein Abstand zu der Strahlungsquelle ist. Auf diese Weise lässt sich eine Abstrahlcharakteristik einer Strahlungsquelle ausmessen.

Unter einem "Ring" ist im Rahmen der vorliegenden Anmeldung ein beliebiger geschlossener Querschnitt zu verstehen. Der Begriff "Ring" bedeutet somit nicht zwangsweise, dass der Querschnitt um eine Achse rotiert wird, so dass sich ein kreisförmiger Ring ergibt. Unter einem "Ring" wird das Extrudieren eines Querschnitts entlang einer beliebigen geschlossenen Linie verstanden. Beispielsweise kann der "Ring" somit auch eine viereckige Außenform aufweisen, wie sie beispielsweise entsteht, wenn ein beliebiger Querschnitt, beispielsweise ein Kreis oder ein Rechteck, entlang einer geschlossenen quadratischen Linie extrudiert wird.

Unter dem Begriff "frei" ist zu verstehen, dass ein Beleuchtungsmodul eine mittige Aussparung aufweisen kann. Durch diese mittige Aussparung kann das Licht, das letztendlich auf den optischen Sensor abgebildet werden soll, ohne Strahlablenkung hindurchtreten. In dem Randbereich können dann die mindestens eine Beleuchtungsanordnung und die erste Schnittstelleneinrichtung zum sensorseitigen Koppeln des Beleuchtungsmoduls angeordnet werden.

Unter "sensorseitig" wird dabei diejenige Seite des Beleuchtungsmoduls verstanden, die in Richtung des optischen Sensors weist. Sie liegt einer "werkstückseitigen" Seite des Beleuchtungsmoduls gegenüber, die in Richtung des Werkstücks weist. Von der werkstückseitigen Seite des Beleuchtungsmoduls wird darüber hinaus das Licht zur Beleuchtung des Werkstücks abgestrahlt.

Durch das gemäß dem ersten Aspekt vorgeschlagene Beleuchtungs-modul wird es möglich, gleichzeitig mehrere Arbeitsbereiche bzw. Arbeitsebenen mittels der mindestens einen Beleuchtungsanordnung zu beleuchten. Bisher mussten immer mehrere Beleuchtungsanordnungen bzw. Gruppen von Beleuchtungsanordnungen für verschiedene Arbeitsbereiche bzw. Arbeitsebenen vorgesehen werden, die dann wahlweise geschaltet wurden. In anderen Ausführungsformen mussten die Beleuchtungsanordnungen relativ zu dem Sensor bewegt werden, um unterschiedliche Arbeitsabstände einzustellen. Mittels der vorliegenden Erfindung besteht hierfür jedoch keine weitere Notwendigkeit. Es wurde festgestellt, dass die Lichtintensität vieler Beleuchtungsanordnungen derart hoch ist, dass sie auch unterhalb der maximalen Lichtintensität noch eine ausreichende Beleuchtung von Werkstücken bereitstellen können. Insbesondere ist dies beispielsweise bei modernen LEDs der Fall. In der Regel sind alle Orte innerhalb eines Abstrahlwinkels, d.h. alle Orte mit einer Lichtintensität von mehr als 50 %, ausreichend beleuchtet, um mit modernen optischen Sensoren ein verwertbares Bild zu erfassen. Insbesondere ist dies der Fall, wenn, wie erfindungsgemäß vorgeschlagen, innerhalb des Abstrahlwinkels der Lichtintensitätsverlauf asymmetrisch eingestellt ist. Auf diese Weise ist es möglich, "Schwerpunkte" hinsichtlich der Lichtintensität zu bilden, und zwar dies derart, dass bestimmte Arbeitsbereiche bzw. Arbeitsebenen bestrahlt werden. Auf diese Weise wird es dann möglich, mehrere Arbeitsbereiche bzw. Arbeitsebenen gleichzeitig ausreichend zu bestrahlen, so dass in mehreren Arbeitsebenen gearbeitet werden kann, ohne dass die Beleuchtung ausgetauscht oder umgeschaltet werden muss. Auf diese Weise können Beleuchtungsanordnungen eingespart und der konstruktive Aufbau von Beleuchtungsmodulen vereinfacht werden.

Auf diese Weise ist es möglich, zwei diskrete Arbeitsbereiche zu beleuchten. Möglicherweise störende Reflexionen aus einem dazwischen liegenden Bereich des Werkstücks werden auf diese Weise minimiert bzw. vermieden.

Gemäß einem zweiten Aspekt wird vorgeschlagen, ein Koordinatenmessgerät zum Vermessen eines Werkstücks mittels eines optischen Sensors bereitzustellen, wobei das Koordinatenmessgerät mindestens ein Beleuchtungsmodul, insbesondere mehrere Beleuchtungsmodule, gemäß dem ersten Aspekt der Erfindung aufweist, und wobei ein Messkegel, insbesondere ein Messzylinder, des optischen Sensors entlang der Rotationssymmetrieachse verläuft. Des Weiteren kann eine Halteeinrichtung mit mindestens einem Magazinplatz, insbesondere mehreren Magazinplätzen, für das Beleuchtungsmodul bzw. die Beleuchtungsmodule vorgesehen sein.

Das Koordinatenmessgerät gemäß dem zweiten Aspekt der Erfindung weist daher dieselben Vorteile wie das Beleuchtungsmodul gemäß dem ersten Aspekt der Erfindung auf

Die eingangs gestellte Aufgabe wird daher vollkommen gelöst.

In einer Ausgestaltung des Beleuchtungsmoduls gemäß dem ersten Aspekt ist vorgesehen, dass der Lichtintensitätsverlauf der mindestens einen Beleuchtungsanordnung asymmetrisch zu einer Richtung einer maximalen Lichtintensität der Beleuchtungsanordnung ist.

Auf diese Weise wird es besonders einfach, zwei Teilbereiche innerhalb des Lichtkegels zu bilden, innerhalb derer jeweils ein gewünschter Lichtintensitätsverlauf bereitgestellt ist. Der Lichtkegel kann dann geeignet in etwa in Richtung der maximalen Lichtintensität geteilt werden, beispielsweise, wie nachfolgend noch erläutert werden wird, mittels eines Prismas, so dass über einen Lichtkegel mit den so eingestellten unterschiedlichen Lichtintensitätsverläufen dann zur Beleuchtung zweier Arbeitsbereiche bzw. Arbeitsebenen eingesetzt werden können.

In einer weiteren Ausgestaltung des Beleuchtungsmoduls gemäß dem ersten Aspekt kann vorgesehen sein, dass die mindestens eine Beleuchtungsanordnung jeweils mindestens ein optisches Element aufweist, das die Abstrahlcharakteristik die jeweiligen Beleuchtungsanordnungen moduliert.

Dies ermöglicht die Verwendung normaler herkömmlicher Beleuchtungsanordnungen. So können herkömmliche Lichtquellen und übliche passive Elemente, wie beispielsweise Lichtleiter und dgl., verwendet werden. Besondere Lichtquellen, die bereits eine asymmetrische Abstrahlcharakteristik aufweisen, sind natürlich möglich, jedoch sind Strahler, wie beispielsweise LEDs, die eine gerichtete Abstrahlcharakteristik aufweisen, die im Wesentlichen symmetrisch ist, kostengünstiger. Dies wird durch die Modulation mittels mindestens eines optischen Elements erzielt.

In einer weiteren Ausgestaltung des Beleuchtungsmoduls gemäß dem ersten Aspekt kann dabei vorgesehen sein, dass die mindestens eine Beleuchtungsanordnung mindestens einen Lichtleiter aufweist, und wobei das mindestens eine optische Element an einem werkstückseitigen Ende des Lichtleiters angeordnet ist.

Auf diese Weise kann das Beleuchtungsmodul beispielsweise als ein passives Beleuchtungsmodul ausgebildet sein, das durch mindestens einen Lichtleiter das Licht auf geeignete Weise an das Werkstück heranführt. An dem werkstückseitigen Ende wird das aus dem Lichtleiter austretende Licht dann wie gewünscht moduliert.

In einer weiteren Ausgestaltung des Beleuchtungsmoduls gemäß dem ersten Aspekt kann vorgesehen sein, dass die mindestens eine Beleuchtungsanordnung eine Lichtquelle aufweist, und wobei das mindestens eine optische Element eine Abstrahlcharakteristik der Lichtquelle moduliert.

Die Beleuchtungsanordnung kann somit auch als aktive Beleuchtungsanordnung mit einer eigenen Lichtquelle ausgestaltet sein, die insbesondere an einer Werkstückseite des Beleuchtungsmoduls angeordnet ist. Die Lichtquelle an sich kann herkömmlich ausgebildet sein, beispielsweise eine gerichtete Lichtquelle sein, die nach Art eines Lambertzschen Strahlers abstrahlt. Ein geeignetes optisches Element, das beispielsweise die Lichtquelle bedeckt, kann dann wie gewünscht die Abstrahlcharakteristik der gesamten Beleuchtungsanordnung modulieren.

In einer Ausgestaltung des Beleuchtungsmoduls gemäß dem ersten Aspekt kann vorgesehen sein, dass die mindestens eine Lichtquelle eine LED bzw. Leuchtdiode oder eine OLED bzw. organische Leuchtdiode ist. Des Weiteren kann die Lichtquelle auch ein Laser(Light Amplification through Stimulated Emission of Radiation)-Element sein. Das abgestrahlte Licht kann Licht in einem sichtbaren Spektralbereich von etwa 380 bis 780 nm sein. Es kann aber durchaus auch Licht in einem nicht sichtbaren Spektralbereich, beispielsweise im ultravioletten Bereich oder im infraroten Bereich, sein.

In einer weiteren Ausgestaltung des Beleuchtungsmoduls gemäß dem ersten Aspekt kann vorgesehen sein, dass das mindestens eine optische Element mindestens ein refraktives optisches Element und/oder mindestens ein diffraktives optisches Element und/oder mindestens ein holographisches optisches Element und/oder mindestens ein reflektierendes optisches Element ist.

Gemäß der Erfindung kann das mindestens eine optische Element somit auf verschiedene Arten eine optische Wirkung hervorrufen. Insbesondere kann vorgesehen sein, dass ein refraktives optisches Element zum Beeinflussen der Abstrahlcharakteristik vorgesehen ist.

In einer weiteren Ausgestaltung des Beleuchtungsmoduls gemäß dem ersten Aspekt kann vorgesehen sein, dass das mindestens eine optische Element ein Prisma aufweist, das in einem Teilbereich des Abstrahlwinkels angeordnet ist.

Auf diese Weise kann konstruktiv relativ einfach ein Teil des von der Beleuchtungsanordnung emittierten Lichts "abgezweigt" werden und in einen anderen Raumbereich geleitet werden. Auf diese Weise findet quasi eine Zweiteilung des Abstrahlkegels der Beleuchtungsanordnung statt.

In einer weiteren Ausgestaltung des Beleuchtungsmoduls gemäß dem ersten Aspekt kann vorgesehen sein, dass das mindestens eine optische Element eine Meniskuslinse aufweist, die in dem gesamten Abstrahlwinkel angeordnet ist.

Beispielsweise kann dabei vorgesehen sein, dass eine der Flächen der Meniskuslinse asphärisch ausgestaltet ist, um auf diese Weise die geeignete Asymmetrie in Abstrahlcharakteristik der Beleuchtungsanordnung herzustellen. Auch eine sonstige asymmetrische Ausbildung der Meniskuslinse ist denkbar, beispielsweise eine Verkippung der vorderen und Rückfläche der Meniskuslinse nur in einem Teilbereich der Oberfläche relativ zueinander, um nur dort eine prismatische Wirkung herbeizuführen. Auch auf diese Weise kann mit einfachen Mitteln die gewünschte Abstrahlcharakteristik der Beleuchtungsanordnung eingestellt werden.

In einer weiteren Ausgestaltung des Beleuchtungsmoduls gemäß dem ersten Aspekt der Erfindung kann vorgesehen sein, dass die Sensorseite eine erste Schnittstelleneinrichtung zum sensorseitigen Koppeln des Beleuchtungsmoduls in einer definierten Lage aufweist.

Auf diese Weise wird eine vordefinierte Anordnung des Beleuchtungs-moduls relativ zu dem optischen Sensor des Koordinatenmessgeräts ermöglicht, so dass die eingestellte Abstrahlcharakteristik zu diesem optischen Sensor erfasst und gewünschte Arbeitsebenen beleuchtet. Beispielsweise kann vorgesehen sein, dass eine Dreipunktlagerung erfolgt. Dabei ist beispielsweise eine Lagerung über Kugelpaare, Kugel-Walzenpaare oder eine Lagerung in Senkung für die erste Kugel, eine Lagerung in einer V-Nut für die zweite Kugel und eine Lagerung auf einer Fläche für die dritte Kugel vorgesehen.

In einer weiteren Ausgestaltung des Beleuchtungsmoduls gemäß dem ersten Aspekt kann vorgesehen sein, dass der Grundkörper die Form eines Rings mit einem freien Zentralbereich und einem Randbereich aufweist, wobei die mindestens eine Beleuchtungsanordnung in dem Randbereich auf der Werkstückseite angeordnet ist.

Auf diese Weise wird ein besonders einfacher Aufbau des Beleuchtungsmoduls erreicht Durch den freien Zentralbereich kann das Werkstück von dem optischen Sensor ungehindert beobachtet werden.

In einer weiteren Ausgestaltung des Beleuchtungsmoduls gemäß dem ersten Aspekt kann vorgesehen sein, dass das Beleuchtungsmodul eine Mehrzahl von Beleuchtungsanordnungen aufweist, die an der Werkstückseite des Grundkörpers rotationssymmetrisch zu einer Rotationssymmetrieachse angeordnet sind, wobei jede Beleuchtungsanordnung eine Richtung maximaler Lichtintensität aufweist, und wobei die Beleuchtungsanordnungen derart ausgerichtet sind, dass sich die Richtungen maximaler Lichtintensität in einem ersten Punkt schneiden, der auf der Rotationssymmetrieachse liegt.

Auf diese Weise kann eine besonders gleichmäßige Beleuchtung eines Werkstücks von allen Seiten sichergestellt werden.

Des Weiteren ist in dem Beleuchtungsmoduls gemäß dem ersten Aspekt vorgesehen, dass die Abstrahlcharakteristik jeder Beleuchtungsanordnung derart moduliert ist, dass sie einen ersten Teilbereich und mindestens einen zweiten Teilbereich aufweist. Die ersten Teilbereiche können dabei in einem ersten Arbeitsbereich zusammenfallen. Die Arbeitsbereiche der zweiten Beleuchtungsbereiche können in einem zweiten Arbeitsbereich zusammenfallen. Darüber hinaus können auch dritte oder vierte Teilbereiche vorhanden sein, die in einem dritten bzw. vierten Arbeitsbereich zusammenfallen. Auch darüber hinaus sind noch weitere Teilbereiche denkbar.

In einer weiteren Ausführungsform des Beleuchtungsmoduls gemäß dem ersten Aspekt kann vorgesehen sein, dass das Beleuchtungsmodul eine Identifikationseinrichtung zum Identifizieren zumindest eines Typs des Beleuchtungsmoduls aufweist.

Dabei kann es sich sowohl um ein aktives als auch ein passives Beleuchtungsmodul handeln. Auf diese Weise wird es möglich, dass einem Koordinatenmessgerät bzw. einer Regelungseinrichtung des Koordinatenmessgeräts bekannt ist, welches bzw. welche Beleuchtungsmodule mit dem optischen Sensor gekoppelt sind. Auf diese Weise kann überprüft werden, ob das gewünschte bzw. richtige Beleuchtungsmodul angekoppelt wurde. Auch bei einem manuellen Wechsel kann auf diese Weise unmittelbar festgestellt werden, welches Beleuchtungsmodul angekoppelt wurde. Die Identifikationseinrichtung kann dabei zumindest einen Typ des Beleuchtungsmoduls mitteilen. Sie kann darüber hinaus aber auch weitere Daten des Beleuchtungsmoduls, wie beispielsweise Stand der Energieversorgung, Funktionstüchtigkeit einer oder mehrerer Beleuchtungsanordnungen usw., bereitstellen. Die Identifikationseinrichtung kann als aktive Identifikationseinrichtung, die eine eigene Energieversorgung benötigt, oder aber als passive Identifikationseinrichtung bereitgestellt sein, die keine eigene Energieversorgung benötigt. Beispielsweise kann die Identifikationseinrichtung als Permanentspeicher ausgebildet sein, aus dem die notwendigen Daten des Beleuchtungsmoduls ausgelesen werden können. Die Identifikationseinrichtung kann drahtgebunden oder aber auch drahtlos ausgeführt sein. Beispielsweise kann es sich bei der Identifikationseinrichtung auch um einen RFID-Chip handeln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:

Fig. 1        eine Ausführungsform eines erfindungsgemäßen Koordinatenmessgeräts,

Fig. 2        eine Detailansicht eines mit einem Beleuchtungsmodul ausgestatteten optischen Sensors eines Koordinatenmessgeräts,

Fig. 3        eine schematische Ansicht eines mit einem optischen Sensor gekoppelten Beleuchtungsmoduls,

Fig. 4        eine schematische Querschnittsansicht entlang einer Linie IV-IV in Fig. 3,

Fig. 5a bis 5c   verschiedene Ausführungsformen eines erfindungsgemäßen Beleuchtungsmoduls,

Fig. 6        eine Ausführungsform einer Kaskadenkopplung mehrerer erfindungsgemäßer Beleuchtungsmodule,

Fig. 7        eine schematische Detailansicht im Bereich einer Halteeinrichtung in einem Koordinatenmessgerät,

Fig. 8        eine schematische Darstellung einer Abstrahlcharakteristik einer Beleuchtungsanordnung,

Fig. 9        eine schematische Ansicht einer Ausführungsform eines Beleuchtungsmoduls mit den Abstrahlcharakteristiken der Beleuchtungsanordnungen, und

Fig. 10 eine schematische Ansicht lediglich eines erläuternden Beispiels eines Beleuchtungsmoduls mit den Abstrahlcharakteristiken der Beleuchtungsanordnungen, und

Fig. 11 eine schematische Querschnittsansicht entlang einer Linie XI-XI in Fig. 10.

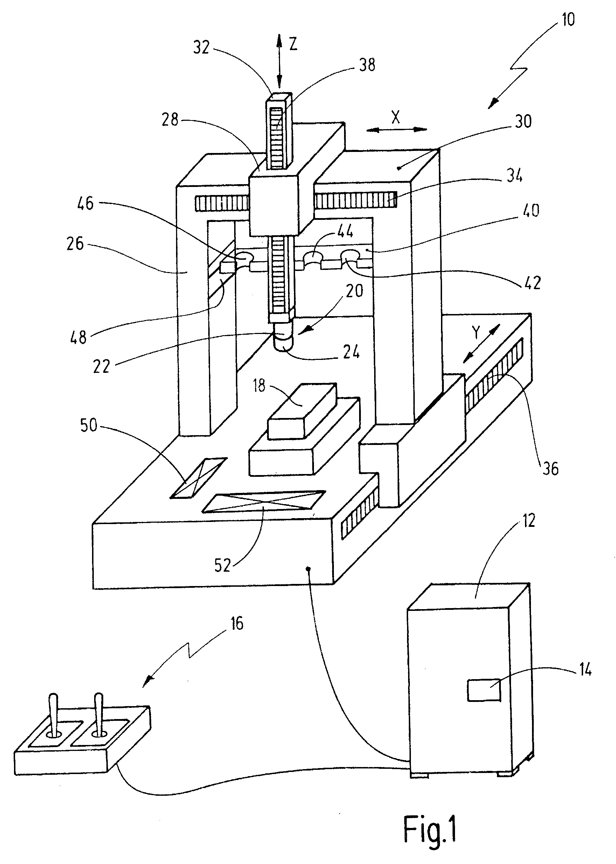

Fig. 1 zeigt eine Ausführungsform eines Koordinatenmessgeräts 10. Das Koordinatenmessgerät 10 weist eine Regelungseinrichtung 12 auf, die dazu ausgebildet ist, das Koordinatenmessgerät 10 automatisiert zu steuern. Hierzu kann die Regelungseinrichtung 12 eine Datenverarbeitungseinheit 14 aufweisen. Des Weiteren kann die Regelungseinrichtung 12 auch Anzeigevorrichtungen aufweisen, die einem Nutzer des Koordinatenmessgeräts 10 Informationen über angewählte Betriebsmodi, Messergebnisse usw. anzeigen. Des Weiteren weist das Koordinatenmessgerät 10 eine Bedienungseinrichtung 16 auf, die einem Nutzer ermöglicht, das Koordinatenmessgerät 10 zu steuern. Die Bedienungseinrichtung 16 ist dabei lediglich schematisch dargestellt. Dies soll zum einen ein manuelles Bewegen des Koordinatenmessgeräts 10 ermöglichen. Des Weiteren kann die Bedienungseinrichtung 16 dazu ausgebildet sein, dass der Nutzer Systemeingaben in die Regelungseinrichtung 12 eingeben kann, um einen Betriebsmodus usw. auszuwählen. Die Regelungseinrichtung 12 kann das Koordinatenmessgerät 10 des Weiteren auch automatisch regeln.

Das Koordinatenmessgerät 10 dient dazu, ein Werkstück 18 zu vermessen. Hierzu weist das Koordinatenmessgerät 10 einen optischen Sensorkopf 20 auf, der einen optischen Sensor 22 und ein Beleuchtungsmodul 24 aufweist. Das Beleuchtungsmodul 24 ist mit dem optischen Sensor 22 gekoppelt.

Um den optischen Sensorkopf 20 relativ zu dem Werkstück 18 bewegen zu können, weist das Koordinatenmessgerät in der dargestellten Ausführungsform ein Portal 26 auf, das in einer Y-Richtung bewegbar ist. Ein Schlitten 28 ist in einer X-Richtung bewegbar an einer Traverse 30 des Portals 26 gelagert. Auf diese Weise kann der optische Sensorkopf 20 durch Bewegung des Schlittens 28 auf der Traverse 30 in X-Richtung bewegt werden. In dem Schlitten 28 ist eine Pinole 32 vorgesehen, die relativ zu dem Schlitten 28 in einer Z-Richtung bewegbar ist. An der Pinole 32 ist dann der optische Sensorkopf 20 angebracht. Auf diese Weise ist es möglich, den optischen Sensorkopf 20 in allen drei Raumrichtungen X, Y und Z zu bewegen. Eine Lagerung des Portals 26 des Schlittens 28 und der Pinole 32 zueinander kann beispielsweise mittels sogenannter Luftlager ausgeführt sein. Um eine Lage des Portals 26, des Schlittens 28 und der Pinole 32 zu erfassen, kann das Koordinatenmessgerät 10 Skalen aufweisen. Beispielsweise können eine Skala 34 für die X-Richtung, eine Skala 36 für die Y-Richtung und eine Skala 38 für die Z-Richtung vorgesehen sein.

Des Weiteren kann das Koordinatenmessgerät 10 eine Halteeinrichtung 40 aufweisen. In der Halteeinrichtung 40 ist mindestens ein Magazinplatz vorgesehen, insbesondere sind mehrere Magazinplätze vorgesehen. Dargestellt sind ein erster Magazinplatz 42, ein zweiter Magazinplatz 44 und ein dritter Magazinplatz 46. Jeder der Magazinplätze 42, 44, 46 kann dazu vorgesehen sein, ein bestimmtes Beleuchtungsmodul 24 zu tragen. Ein Wechseln eines Beleuchtungsmoduls 24 kann dann beispielsweise derart automatisiert erfolgen, dass die Regelungseinrichtung 12 ein momentan gekoppeltes Beleuchtungsmodul 24 in einem der Magazinplätze 42, 44, 46 ablegt und ein weiteres Beleuchtungsmodul (nicht dargestellt) aus einem anderen der Magazinplätze 42, 44, 46 aufnimmt.

In der dargestellten Ausführungsform ist die Halteeinrichtung 40 an dem Portal 26 angebracht, so dass sich die Halteeinrichtung 40 unterhalb der Traverse 30 parallel zu der Traverse 30 in X-Richtung erstreckt. Alternativ kann beispielsweise auch vorgesehen sein, dass die Halteeinrichtung 40 direkt an der Traverse 30 angebracht ist. Durch eine entsprechende Anordnung der Halteeinrichtung 40 können Verfahrwege zum Wechseln eines Beleuchtungsmoduls 24 besonders kurz gehalten werden. Wie jedoch aus der dargestellten Ansicht ersichtlich ist, besteht in der dargestellten Anordnung zunächst keinerlei Möglichkeit, den optischen Sensor 22 und die Halteeinrichtung 40 in Y-Richtung relativ zueinander zu verfahren. Daher ist die Halteeinrichtung 40 in der dargestellten Ausführungsform auf einem Schlitten 48 in dem Portal 26 gelagert, so dass ein relatives Bewegen der Halteeinrichtung 40 zu dem optischen Sensor 22 in Y-Richtung möglich wird. Dabei wird die Halteeinrichtung 40 in Y-Richtung relativ zu dem Portal 26 des Schlittens 48 bewegt.

Selbstverständlich sind darüber hinaus alternative Anordnungen der Halteeinrichtung 40 denkbar. Beispielsweise ist es möglich, dass an schematisch angedeuteten Aufstellungsorten 50, 52 die Halteeinrichtung 40 positioniert wird. Sie steht dann frei in dem Koordinatenmessgerät 10. Die Magazinplätze 42, 44, 46 können dann frei von dem optischen Sensor 22 angefahren werden, um ein Beleuchtungsmodul 24 abzulegen oder aufzunehmen.

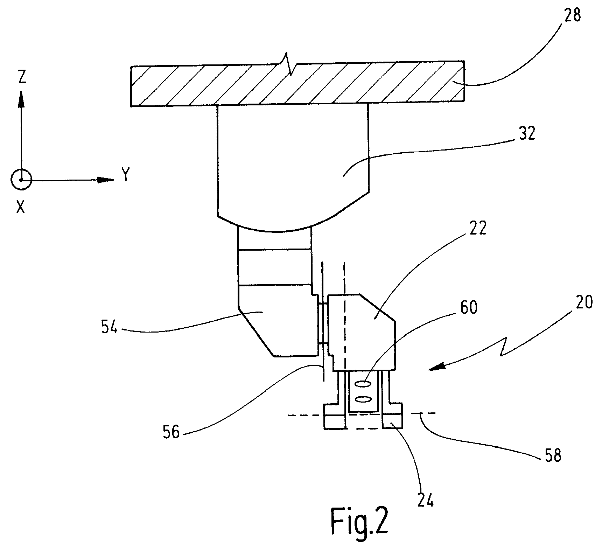

Fig. 2 zeigt eine schematische Detailansicht eines Teils des Koordinatenmessgeräts 10. Schematisch sind erneut der Schlitten 28 und die Pinole 32 dargestellt. Wie Fig. 2 zu entnehmen ist, kann an der Pinole 32 beispielsweise eine sogenannte Drehschwenkeinheit 54 angeordnet sein, die ein Drehen des optischen Sensors 22 um zwei Achsen ermöglicht, insbesondere in der dargestellten Ausführungsform beispielsweise sowohl um die Z-Richtung als auch die Y-Richtung. Auf diese Weise kann der optische Sensor 22 in einer Vielzahl von Richtungen ausgerichtet werden, um das Werkstück 18 aus einem gewünschten Betrachtungswinkel zu betrachten. Verschiedene Systemkomponenten sind dabei über Wechselflächen 56 gekoppelt, beispielsweise ist mittels einer Wechselfläche 56 der optische Sensor 22 mit der Drehschwenkeinheit 54 gekoppelt. Über die Wechselfläche 56 hinweg werden elektrische Versorgungsleitungen, Kommunikationsschnittstellen, optische Schnittstellen usw. bereitgestellt, um den optischen Sensor 22 zum einen mit Energie zu versorgen und zum anderen das Werkstück 18 anstrahlen zu können. Des Weiteren werden die von dem optischen Sensor 22 erfassten Daten über die Wechselfläche 56 und die dort bereitgestellten Schnittstellen hinweg zu der der Regelungseinrichtung 12 und ihrer Datenverarbeitungseinheit 14 geleitet.

An dem optischen Sensor 22 ist entlang einer ersten Schnittstelleneinrichtung 58 das Beleuchtungsmodul 24 gekoppelt. Das Beleuchtungsmodul 24 weist in der dargestellten Ausführungsform die Form eines kreisförmigen Rings auf. Darüber hinaus weist der optische Sensor 22 noch eine Abbildungsoptik 60 auf, die dazu dient, von einem Werkstück 18 empfangene Lichtstrahlung auf den optischen Sensor 22 abzubilden.

Die Ausgestaltung des Beleuchtungsmoduls 24 wird im Folgenden im Hinblick auf die weiteren Figuren erläutert.

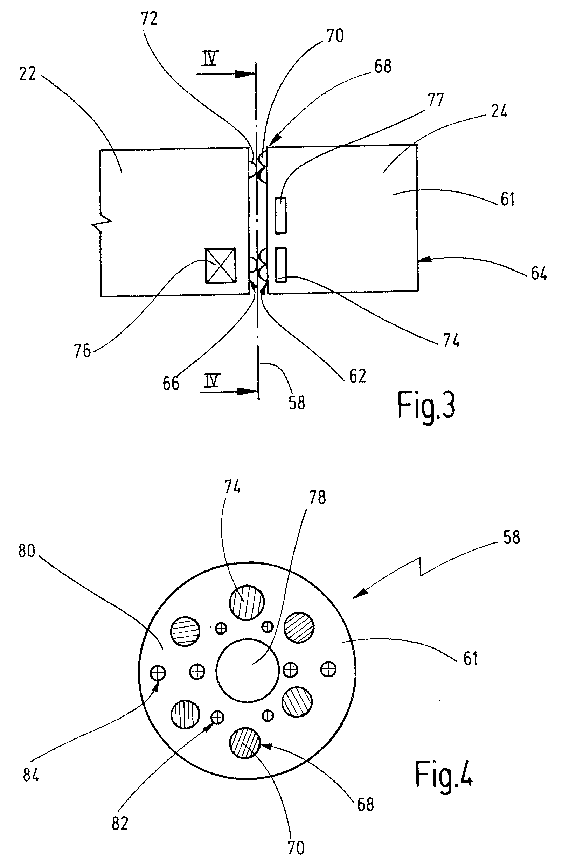

In Fig. 3 ist schematisch das Beleuchtungsmodul 24 dargestellt, das mit dem optischen Sensor 22 gekoppelt ist.

Das Beleuchtungsmodul 24 weist einen Grundkörper 61 auf. Der Grundkörper 61 wiederum weist eine Sensorseite 62 auf, die dem optischen Sensor 22 zugewandt ist. Gegenüberliegend zu der Sensorseite 62 weist der Grundkörper 61 eine Werkstückseite 64 auf, die im Betrieb dem Werkstück 18 zugewandt ist.

Der Sensorseite 62 des Grundkörpers 61 liegt im gekoppelten Zustand eine Kopplungsseite 66 des Sensors 22 gegenüber.

Zum Koppeln der Kopplungsseite 66 des optischen Sensors 22 und der Sensorseite 62 des Grundkörpers 61 ist eine Dreipunktlagerung 68 vorgesehen. Eine solche Dreipunktlagerung ist dem Durchschnittsfachmann grundsätzlich bekannt und dient dazu, das Beleuchtungsmodul 24 in eindeutiger Lage mit dem optischen Sensor 62 zu koppeln. Hierzu sind Dreipunktlagerelemente 68 an der Sensorseite 62 des Beleuchtungsmoduls 24 und Dreipunktlagerelemente 72 an der Kopplungsseite 66 des optischen Sensors 22 vorgesehen. Dabei ist beispielsweise eine Lagerung über Kugelpaare, KugelWalzenpaare oder eine Lagerung in Senkung für die erste Kugel, eine Lagerung in einer V-Nut für die zweite Kugel und eine Lagerung auf einer Fläche für die dritte Kugel der Dreipunktlagerung vorgesehen.

Um eine notwendige Haltekraft aufzubringen, die das Beleuchtungsmodul 24 und den optischen Sensor 22 zusammenhält, kann vorgesehen sein, dass in dem Grundkörper 61 ein Permanentmagnet 74 vorgesehen ist. Der Permanentmagnet 74 ist dabei derart angeordnet, dass sich die Magnetfeldlinien über die erste Schnittstelleneinrichtung 58 hinweg durch den optischen Sensor 22 erstrecken, so dass eine geeignete Haltekraft zwischen dem Beleuchtungsmodul 24 und dem optischen Sensor 22 bereitgestellt ist. Natürlich müssen sich die Magnetfeldlinien dabei durch einen ferromagnetischen Werkstoff in dem optischen Sensor 22 erstrecken. Auch kann ein weiterer Permanentmagnet oder ein Elektromagnet (nicht dargestellt) in dem optischen Sensor vorhanden sein, um zusammen mit dem Permanentmagneten 74 die erforderliche Haltekraft aufzubringen. Selbstverständlich kann darüber hinaus auch vorgesehen sein, dass zusätzliche Permanentmagneten sowohl in dem Beleuchtungsmodul 24 und/oder in dem optischen Sensor 22 vorgesehen sind. Selbstverständlich kann auch vorgesehen sein, dass der Permanentmagnet 74 nur in dem optischen Sensor 22 vorgesehen ist.

Des Weiteren kann vorgesehen sein, dass der optische Sensor 22 einen Elektromagneten 76 aufweist, der schaltbar ist. Dieser ist dabei derart ausgestaltet, dass er ein von dem Permanentmagnet 74 aufgebrachtes Magnetfeld zumindest teilweise neutralisiert, so dass das Beleuchtungsmodul 24 einfacher von dem optischen Sensor 22 getrennt werden kann. Selbstverständlich kann auch vorgesehen sein, dass einer oder mehrere Elektromagneten in dem Beleuchtungsmodul 24 angeordnet sind. Um die Notwendigkeit einer Energieversorgung des Beleuchtungsmoduls 24 zu vermeiden, wird der Elektromagnet in der Regel in dem optischen Sensor 22 vorgesehen sein.

Des Weiteren kann in dem Beleuchtungsmodul 24 aber auch eine Energieempfangseinrichtung 77 vorgesehen sein, die entweder drahtlos oder drahtgebunden über die erste Schnittstelleneinrichtung 58 hinweg mit dem optischen Sensor 22 derart gekoppelt ist, dass das Beleuchtungsmodul 24 mit einer Energieversorgung versehen ist.

Fig. 4 zeigt eine Querschnittsansicht entlang einer Linie IV-IV in Fig. 3.

Wie in dem Querschnitt in Fig. 4 zu erkennen ist, weist der Grundkörper 61 die Form eines kreisförmigen Rings auf. Mit anderen Worten hat der Grundkörper 61 im Wesentlichen die Form eines Zylinders mit einer zentralen Aussparung. Insofern weist der Grundkörper 61 des Beleuchtungsmoduls 24 einen freien Zentralbereich 78 auf, der die Aussparung bildet. Des Weiteren weist der Grundkörper 61 einen Randbereich 80 auf. Der Randbereich 80 weist dann die erste Schnittstelleneinrichtung 58 mit in der dargestellten Ausführungsform beispielsweise drei Permanentmagneten 74, sowie weiteren optischen Schnittstellen 82, um Licht von der optischen Sensor 22 in das Beleuchtungsmodul 24 zu leiten, und elektrischen Schnittstellen 84 zur Energieversorgung des Beleuchtungsmoduls 24 auf. Die Darstellung der Dreipunktlagerung erfolgt in der Fig. 4 und den folgenden Figuren dabei lediglich schematisiert.

Selbstverständlich ist die in Fig. 4 dargestellte Ausführungsform lediglich beispielhaft zu verstehen. Beispielsweise kann auch ein lediglich passive Beleuchtungsanordnungen aufweisendes Beleuchtungsmodul 24 keinerlei elektrische Schnittstellen 84 in dem Randbereich 80 aufweisen. Darüber hinaus ist es möglich, dass ein lediglich aktive Beleuchtungsanordnungen aufweisendes Beleuchtungsmodul 24 keinerlei optische Schnittstellen 82 in dem Randbereich 80 aufweist.

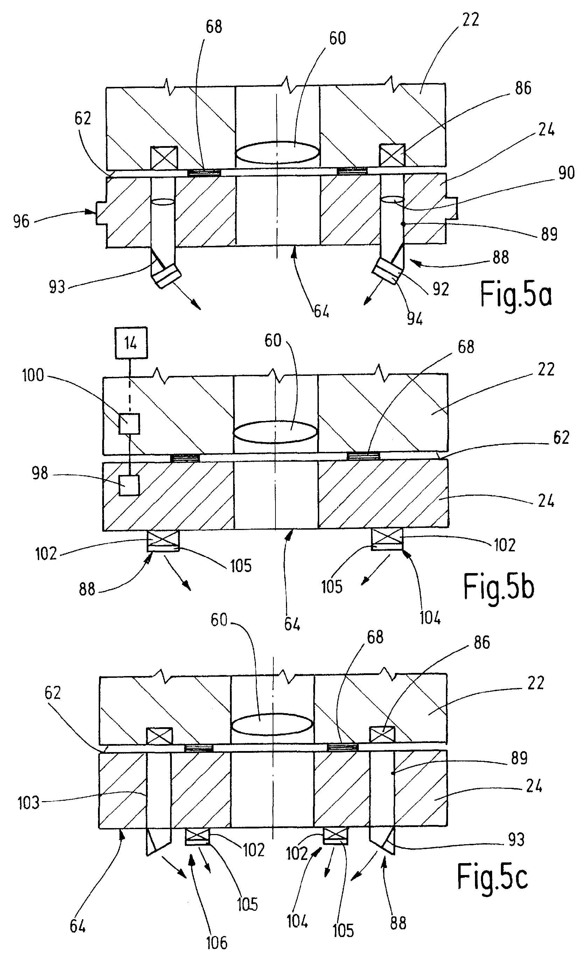

In Fig. 5a ist eine erste Ausführungsform eines Beleuchtungsmoduls 24 beispielhaft dargestellt. Gleiche Elemente sind mit gleichen Bezugszeichen gekennzeichnet und werden im Folgenden nicht erneut erläutert.

In der dargestellten Ausführungsform weist der optische Sensor 22 zumindest eine Lichtquelle 86 auf. In der dargestellten Ausführungsform ist die Lichtquelle 86 beispielsweise ringförmig ausgebildet, d.h. sie weist ein ringförmiges, Licht emittierendes Element auf. Die Lichtquelle 86 kann aber beispielsweise auch als eine Mehrzahl von punktförmigen Lichtquellen, beispielsweise LEDs oder OLEDs oder Laser ausgebildet sein, die ringförmig angeordnet sind.

Das Beleuchtungsmodul 24 weist eine Beleuchtungsanordnung 88 auf. Die Beleuchtungsanordnung 88 ist lediglich passiv ausgebildet. Die Beleuchtungsanordnung 88 weist daher einen ringförmigen Lichtleiter 89 auf und kann darüber hinaus refraktive optische Elemente 90, diffraktive optische Elemente 92, reflektierende optische Elemente 93 und/oder holografische optische Elemente 94 aufweisen. Dies muss jedoch nicht der Fall sein. Beliebige Kombinationen derartiger optischer Elemente sind denkbar, um eine gewünschte Beleuchtung mittels der Beleuchtungsanordnung 88 bereitzustellen. Des Weiteren sind statt eines ringförmigen Lichtleiters 89 natürlich auch mehrere, rotationssymmetrisch oder kreisförmig angeordnete Beleuchtungsanordnungen denkbar, die Beleuchtungsanordnungen können dabei aktiv oder passiv sein. Das von der Lichtquelle 86 emittierte Licht wird in den Lichtleiter 89 eingekoppelt, durch das Beleuchtungsmodul 24 geleitet und auf gewünschte Weise abgelenkt, so dass letztendlich eine geeignete Beleuchtung des Werkstücks 18 mittels des Beleuchtungsmoduls 24 bereitgestellt ist. Darüber hinaus weist das Beleuchtungsmodul 24 eine Wechselschnittstelleneinrichtung 96 auf, die in der dargestellten Ausführungsform als umlaufender Vorsprung ausgebildet ist. Der umlaufende Vorsprung kann dann beispielsweise mit einer umlaufenden Nut in einem Magazinplatz 42, 44, 46 der Halteeinrichtung 40 zusammenwirken, so dass beispielsweise dann das Beleuchtungsmodul 24 in einen solchen Magazinplatz eingeschoben werden kann. Eines oder mehrere der optischen Elemente 90, 92, 93, 94 kann eine Abstrahlcharakteristik der jeweiligen Beleuchtungsanordnung 88 derart ändern, dass der Lichtintensitätsverlauf innerhalb eines Abstrahlwinkels der jeweiligen Beleuchtungsanordnung asymmetrisch ist.

In der Fig. 5b ist eine weitere Ausführungsform eines Beleuchtungsmoduls 24 dargestellt. Gleiche Elemente sind erneut mit gleichen Bezugszeichen gekennzeichnet. Es wird daher nur auf die Unterschiede eingegangen.

Das Beleuchtungsmodul 24 weist eine Identifikationseinrichtung 98 auf, die von einer Identifikationsleseeinrichtung 100 ausgelesen werden kann. Das Auslesen kann dabei drahtgebunden oder aber drahtlos erfolgen. Die Identifikationsleseeinrichtung 100 kann in dem optischen Sensor 22 angeordnet sein. Sie kann aber auch in jedem anderen Element des Koordinatenmessgeräts 10 angeordnet sein. Sie kann auch direkt Teil der Regelungseinrichtung 12 bzw. der Datenverarbeitungseinheit 14 sein. Auf diese Weise ist es möglich, das Beleuchtungsmodul 24 eindeutig zu identifizieren und diese Information der Regelungseinrichtung 12 bereitzustellen. Dies dient zum einen dazu, das gekoppelte Beleuchtungsmodul 24 und dessen Beleuchtungsart zu identifizieren, zum anderen können beispielsweise auch Dimensionen des Beleuchtungsmoduls 24 in der Identifikationseinrichtung 98 hinterlegt sein und ausgelesen werden, um auf diese Weise ein kollisionsfreies Regeln einer Bewegung des mit dem Beleuchtungsmodul 24 gekoppelten optischen Sensors 22 zu ermöglichen.

In der dargestellten Ausführungsform ist das Beleuchtungsmodul 24 als sogenanntes aktives Beleuchtungsmodul ausgestaltet. Es weist zwei Lichtquellen 102 auf. Jede Lichtquelle 102 bildet eine Beleuchtungsanordnung aus, so dass das Beleuchtungsmodul 24 in Fig. 5b zwei Beleuchtungsanordnungen 88, 104 aufweist. Jede der Beleuchtungsanordnungen weist dabei ein optisches Element 105 auf, das eine Abstrahlcharakteristik der jeweiligen Lichtquelle 102 derart ändert, dass der Lichtintensitätsverlauf innerhalb eines Abstrahlwinkels der jeweiligen Lichtquelle 102 asymmetrisch ist.

Insbesondere kann die Lichtquelle 102 in energiesparender LED/OLED-Technik oder als Laser ausgeführt sein. Die Lichtquellen 102 können zum Beispiel in Gruppen, getrennt nach Farben, in einem Dauerstrichoder in einem Pulsbetrieb genutzt werden. Wenn viele unterschiedliche Lichtquellen genutzt werden sollen, so ist es vorteilhaft, eine Steuerungseinrichtung direkt in dem Beleuchtungsmodul 24 vorzusehen. Entsprechend ist über die erste Schnittstelleneinrichtung 58 eine elektrische Schnittstelle zur Versorgung einer solchen Steuerungseinrichtung mit Energie und Steuersignalen vorzusehen. Die Versorgung mit elektrischer Energie kann dabei drahtlos oder drahtgebunden ausgeführt sein. Insbesondere kann des Weiteren vorgesehen sein, dass eine Energieversorgung für eine Steuerungseinrichtung und eine Energieversorgung für die Lichtquellen 102 getrennt voneinander ausgeführt sind.

In Fig. 5c ist noch eine weitere Ausführungsform eines Beleuchtungsmoduls 24 dargestellt. Das Beleuchtungsmodul 24 in der Fig. 5c weist kombiniert sowohl aktive als auch passive Beleuchtungsanordnungen 88, 104 und 106 auf. Im dargestellten Beispiel ist etwa die Beleuchtungsanordnung 88 ein kreisförmiges Ringlicht, das lediglich mittels zweier Lichtleiter 89, 103 und reflektierender optischer Elemente 93 Licht, das von einer Lichtquelle 86 des optischen Sensors 22 emittiert wird, durch das Beleuchtungsmodul 24 leitet und wie gewünscht auf das Werkstück 18 reflektiert. Darüber hinaus sind unterstützend zwei Beleuchtungsanordnungen 104 und 106 vorgesehen, die jeweils als aktiv Licht emittierenden Lichtquellen 102 bereitgestellt sind.

Das erfindungsgemäße Beleuchtungsmodul 24 kann somit entweder passive Beleuchtungsanordnungen 88, 104, 106, aktive Beleuchtungsanordnungen 88, 104, 106 oder sowohl aktive als auch passive Beleuchtungsanordnungen 88, 104, 106 aufweisen. Bei mindestens einer der Beleuchtungsanordnungen 88, 104, 106 ist mittels der optischen Elemente 90, 92, 93, 94, 105 eine Abstrahlcharakteristik der jeweiligen Beleuchtungsanordnungen 88, 104, 106 derart geändert, dass der Lichtintensitätsverlauf innerhalb eines Abstrahlwinkels der jeweiligen Beleuchtungsanordnungen 88, 104, 106 asymmetrisch ist.

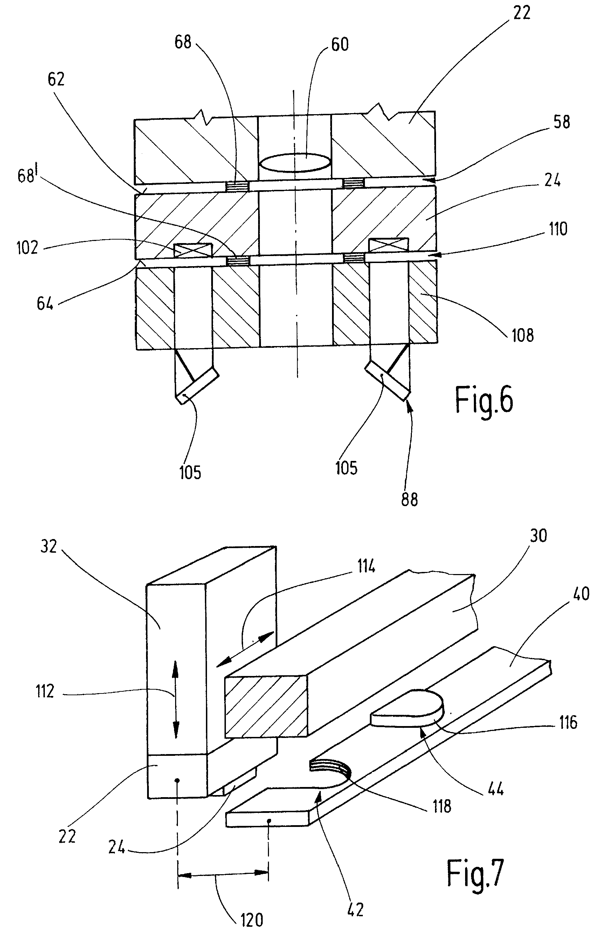

In der Fig. 6 ist noch eine weitere Ausführungsform eines Beleuchtungsmoduls 24 dargestellt. Das dort dargestellte Beleuchtungsmodul 24 weist sowohl auf der Sensorseite 62 eine erste Schnittstellenanordnung 58 auf, die das Beleuchtungsmodul 24 mit dem optischen Sensor 22 koppelt. Das Beleuchtungsmodul 24 weist darüber hinaus auf seiner Werkstückseite 64 eine zweite Schnittstellenanordnung 110 auf, die zum Ankoppeln eines zweiten Beleuchtungsmoduls 108 an das Beleuchtungsmodul 24 dient. Die zweite Schnittstelleneinrichtung 110 kann dabei wie die erste Schnittstelleneinrichtung 58 ausgebildet sein, um eine möglichst volle Kompatibilität der Beleuchtungsmodule 24, 108 hinsichtlich ihrer Kopplung miteinander und mit dem optischen Sensor 22 zu ermöglichen. Dies muss jedoch nicht zwingend der Fall sein. Es kann auch vorgesehen sein, dass die zweite Schnittstelleneinrichtung 110 eine andere Ausgestaltung als die Schnittstelleneinrichtung 58 aufweist.

Mittels dieser kaskadenartigen Kopplung mehrerer Beleuchtungsmodule 24, 108 kann insbesondere die insgesamt in einem Koordinatenmessgerät 10 vorgesehene Anzahl von Beleuchtungsmodulen 24, 108 minimiert werden. Insbesondere kann beispielsweise vorgesehen sein, dass eine Kopplung zweier Beleuchtungsmodule 24, 108 eine Beleuchtungsart bereitstellt, für die ansonsten ein separates Beleuchtungsmodul vorzusehen gewesen wäre. So wird eine besonders große Flexibilität beim Einsatz der Beleuchtungsmodule 24, 108 bereitgestellt.

In Fig. 7 ist schematisch ein Ausschnitt des Koordinatenmessgeräts 10 dargestellt, der Verfahrbewegungen zum Wechseln der Beleuchtungsmodule 24 aufweist. Die Elemente sind dabei lediglich schematisch angedeutet und mit denselben Bezugszeichen wie in den übrigen Figuren gekennzeichnet.

Die Pinole 32 ist in der dargestellten Ausführungsform an der Traverse 30 angelenkt und relativ zu dieser in Z-Richtung 112 und in X-Richtung 114 bewegbar.

Schematisch ist des Weiteren dargestellt, dass an einem ersten Magazinplatz 42 die Halteeinrichtung 40 eine umlaufende Nut 118 aufweist, in die beispielsweise eine Wechselschnittstelleneinrichtung 96, wie sie in der Fig. 5a dargestellt ist, eingreifen kann. In dem zweiten Magazinplatz 44 ist ein weiteres Beleuchtungsmodul 116 angeordnet. Ein bereits an den optischen Sensor 22 angekoppeltes Beleuchtungsmodul 24 kann durch Bewegung der Pinole 32 relativ zu der Traverse 30 in die Richtung 112, 114 in eine Position gebracht werden, in der lediglich nur noch eine transversale Bewegung 120 der Pinole 32 und der Halteeinrichtung 40 relativ zueinander zu erfolgen hat, um das Beleuchtungsmodul 24 beispielsweise in den Magazinplatz 42 einzufahren. Die relative Bewegung kann entweder dadurch ausgeführt werden, dass die Halteeinrichtung 40 beispielsweise mittels des Schlittens 48 relativ zu der Pinole 32 bewegt wird. Wenn die Halteeinrichtung 40 aber beispielsweise an einem Aufstellort 50, 52 vorgesehen ist, kann dies auch durch eine entsprechende Bewegung des optischen Sensors 22 erfolgen, während die Halteeinrichtung 40 feststeht.

Das Beleuchtungsmodul 24 befindet sich dann in dem Magazinplatz 42, wobei die Wechselschnittstelleneinrichtung 96 mit der Nut 118 ineinandergreift. Durch Bewegen der Pinole 32 in der Z-Richtung 112 kann dann eine geeignete große Kraft aufgebracht werden, so dass die Haltekraft von den Permanentmagneten 74 überwunden wird und so das Beleuchtungsmodul 24 von dem optischen Sensor 22 "abreißt". Dabei kann des Weiteren auch vorgesehen sein, dass ein beispielsweise vorgesehener schaltbarer Elektromagnet 76 geschaltet wird, der eine Haltekraft des Permanentmagneten 74 zumindest teilweise neutralisiert.

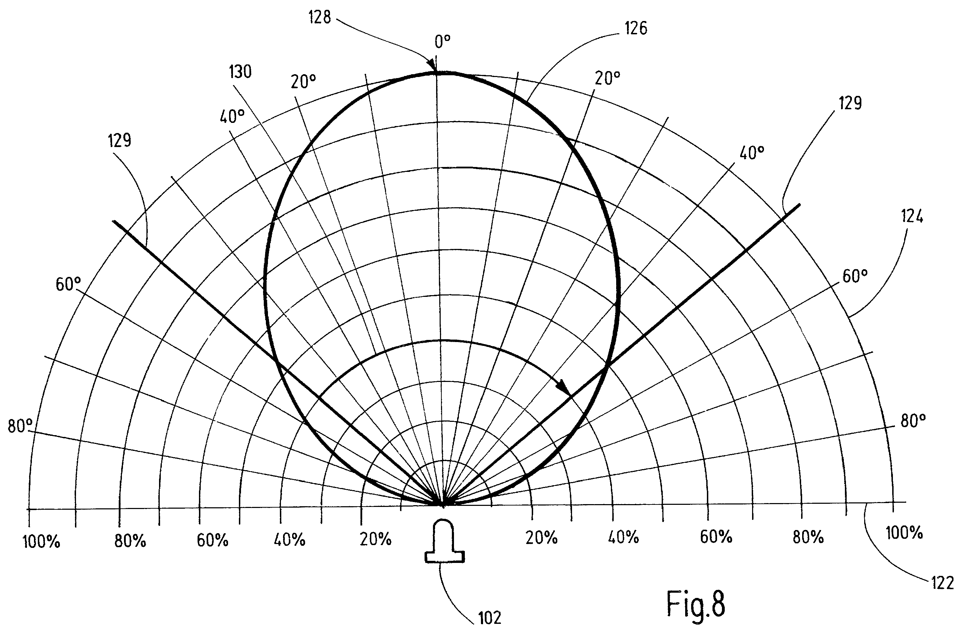

Fig. 8 zeigt eine schematische Darstellung, in der eine übliche Abstrahlcharakteristik einer Lichtquelle 102 gezeigt ist. Die in der Fig. 8 dargestellte Abstrahlcharakteristik ist in der Darstellung symmetrisch ausgebildet. Sie ist also noch nicht dahingehend moduliert, dass sie asymmetrisch ist. Zu Darstellungszwecken eignet sich jedoch gerade die symmetrische Darstellung.

Aufgetragen ist die Verteilung einer Lichtintensität 122 über einen Winkelverlauf 124 von insgesamt 180°. Bei der Lichtquelle 102 handelt es sich um eine gerichtete Lichtquelle, beispielsweise eine LED. Gerade nach vorne, d.h. in einem Winkel von 0°, weist die Lichtquelle die Richtung der maximalen Lichtintensität 128 auf. Die weitere Verteilung der Lichtintensität über die Winkel ist mit einer Linie 126 dargestellt. Sie nimmt sukzessive ab und ist bei einem Winkel von ± 90° letztendlich 0. Daraus ergibt sich der dargestellte charakteristische ovale Verlauf für die Verteilung der Lichtintensität. Als Abstrahlwinkel wird nun derjenige Winkel bezeichnet, der zwischen den Linien liegt, die die Raumrichtungen beschreiben, in denen noch eine Lichtintensität von 50 % vorliegt. Diese Linien sind mit dem Bezugszeichen 129 bezeichnet. Im dargestellten Beispiel liegen sie bei ± 50°. Ein Abstrahlwinkel 130 würde in diesem Fall folglich 100° betragen. Der Verlauf der Lichtintensität innerhalb dieses Abstrahlwinkels ist nun erfindungsgemäß gerade so moduliert, dass er nicht wie im dargestellten Beispiel symmetrisch ist, sondern innerhalb dieses Abstrahlwinkels asymmetrisch verläuft. Insbesondere ist der asymmetrisch zu der Richtung der maximalen Lichtstärke 128 ausgebildet. Beispiele hierfür werden im Folgenden erläutert.

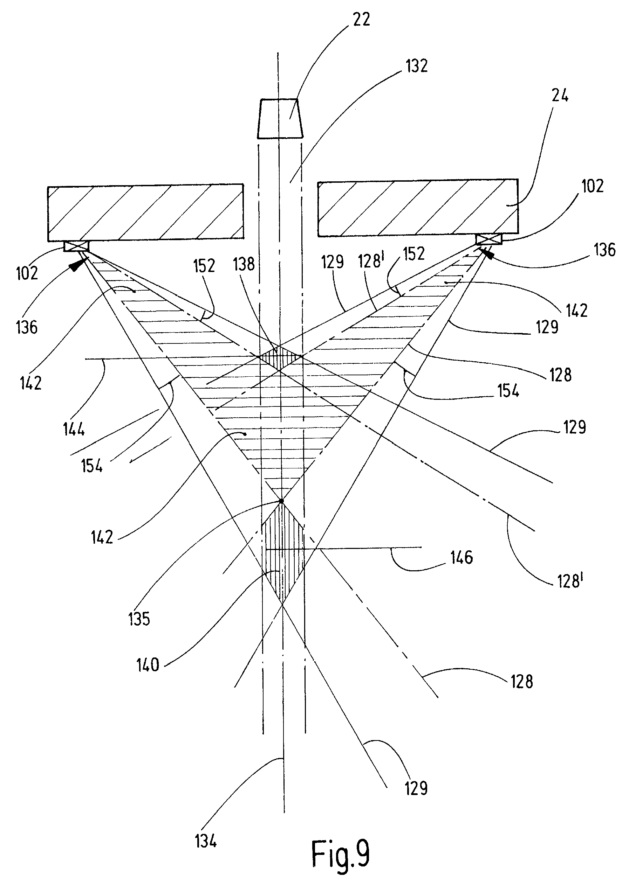

Fig. 9 zeigt eine schematische Darstellung eines Beleuchtungsmoduls 24, das beispielhaft zwei aktive Lichtquellen 102 in der Form von LEDs aufweist. Das Beleuchtungsmodul 24 ist zur Anbringung in einem Koordinatenmessgerät 10 vorgesehen. Ein entsprechender optischer Sensor 22 des Koordinatenmessgeräts 10 weist einen Messkegel, insbesondere einen Messzylinder, 132 auf. Unter dem Messkegel bzw. Messzylinder 132 wird dabei der Raumbereich verstanden, auf den der optische Sensor 22 ausgerichtet ist. Die Lichtquellen 102 der Beleuchtungsanordnungen sind rotationssymmetrisch zu einer Rotationssymmetrieachse 134 angeordnet. Der optische Sensor 22 ist koaxial zu dieser Rotationssymmetrieachse 134 ausgerichtet.

Die Abstrahlcharakteristik jeder Beleuchtungsanordnung 102 ist jeweils mittels eines Prismas 136 moduliert. Grundsätzlich sind die Lichtquellen 102 derart ausgerichtet, dass die Raumrichtungen, in denen eine maximale Lichtintensität 128 vorliegt, in einem ersten Punkt 135 schneiden. Dieser erste Punkt 135 liegt in etwa auf der Rotationssymmetrieachse 134. Mittels des Prismas kann erreicht werden, dass ein Teil des in Fig. 8 schematisch dargestellten Lichtintensitätskegels quasi um einen gewissen Winkelgrad abgeklappt wird. Beispielsweise kann vorgesehen sein, dass versucht wird, in etwa im Bereich der maximalen Lichtintensität eine Teilung der Abstrahlcharakteristik herbeizuführen. Natürlich ist es nicht möglich, quasi die Richtung der maximalen Lichtintensität zu zerteilen. Es wird daher immer genau eine Raumrichtung geben, in der die maximale Lichtintensität vorliegt, diese ist mit dem Bezugszeichen 128 bezeichnet. Schematisch ist in der Figur nur des Weiteren eine Raumrichtung dargestellt, in der nahezu diese maximale Lichtintensität erreicht wird innerhalb des anderen, nicht weggeklappten Bereichs, dieser ist mit dem Bezugszeichen 128' gekennzeichnet. Zu der Raum-Raumrichtung mit der maximalen Lichtintensität 128 ist die Abstrahlcharakteristik innerhalb des Abstrahlwinkels daher asymmetrisch.

Gezielt wird somit ein erster Teilbereich 152 und ein zweiter Teilbereich 154 erzeugt. Zwischen diesen Teilbereichen 152, 154 weist jede Beleuchtungsanordnung 88 dann einen Schattenbereich 142 auf. In diesem Bereich strahlt sie kein Licht bzw. deutlich weniger Licht ab. Durch die rotationssymmetrische Anordnung der Lichtquellen 102 entsteht dann das in der Fig. 9 dargestellte Beleuchtungsmuster. Die ersten Teilbereiche 152 schneiden sich allesamt in einem ersten Arbeitsbereich 138. Die zweiten Teilbereiche schneiden sich allesamt in einem zweiten Arbeitsbereich 140. In diesem ersten Arbeitsbereich 138 und zweiten Arbeitsbereich 140 fallen die Lichtintensitäten aller Beleuchtungsanordnungen bzw. Lichtquellen 102 zusammen. Zwischen den Arbeitsbereichen 138, 140 liegt ein Schattenbereich 142, der nicht beleuchtet ist bzw. nicht homogen beleuchtet ist. Auf diese Weise wird ein erster Arbeitsabstand 144 und ein zweiter, für den optischen Sensor 22 weiter entfernter Arbeitsbereich 146 beleuchtet. Der erste Arbeitsabstand 144 und der zweite Arbeitsabstand 146 werden dabei gleichzeitig beleuchtet. Es ist somit möglich, ohne einen Austausch- oder Umschaltvorgang des Beleuchtungsmoduls 24 mittels des optischen Sensors 22 in diesen beiden Arbeitsabständen 144, 146 zu messen.

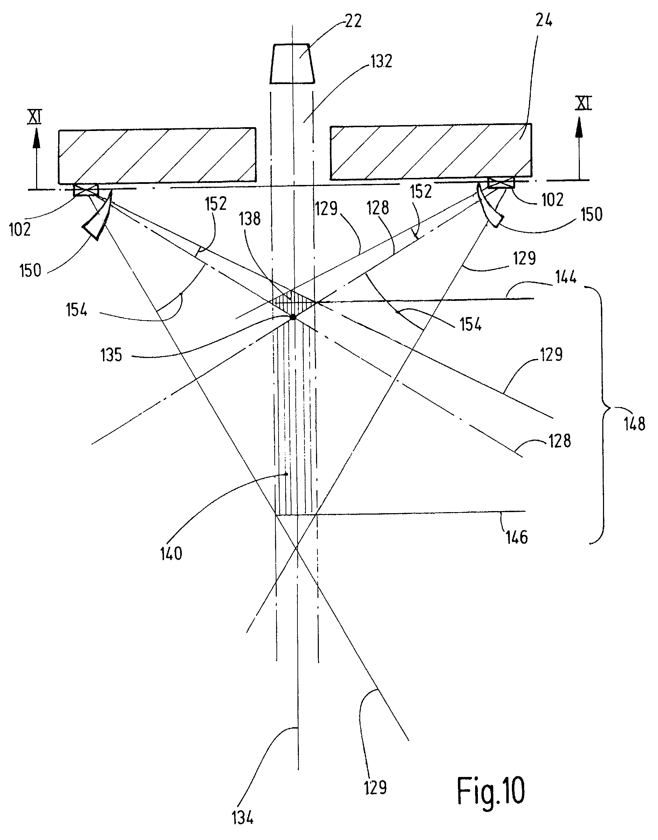

In der Fig. 10 ist lediglich ein erläuterndes Beispiel eines Beleuchtungsmoduls und die damit zusammenhängenden Abstrahlcharakteristiken der Beleuchtungsanordnungen bzw. Lichtquellen 102 dargestellt. Gleiche Elemente sind mit gleichen Bezugszeichen gekennzeichnet und werden im Folgenden nicht erneut erläutert. Im Folgenden wird lediglich auf die Unterschiede eingegangen.

In der dargestellten Ausgestaltung ist die Abstrahlcharakteristik jeder Lichtquelle 102 mittels einer Meniskuslinse 150 moduliert. Die Flächen der Meniskuslinse sind derart ausgestaltet, dass in dem zweiten Teilbereich der Abstrahlcharakteristik jeder Lichtquelle 102 eine Zerstreuung auftritt. Damit tritt wiederum eine Asymmetrie in der Abstrahlclzarafcteristik auf. Der erste Teilbereich 152 nimmt lediglich einen relativ kleinen Raumwinkel ein, der zweite Teilbereich 154 nimmt einen relativ großen Raumwinkel ein. Selbstverständlich kann dieses auch gerade andersherum ausgestaltet werden.

Bei einer derartigen Ausgestaltung berühren sich der erste Arbeitsbereich 138 und der zweite Arbeitsbereich 140 in dem ersten Punkt 135. Auf diese Weise kann ein relativ kleiner erster Arbeitsbereich 138 mit einem ersten Arbeitsabstand 144 eingestellt werden, an den sich ein relativ großer zweiter Arbeitsbereich 140 anschließt. Der zweite Arbeitsbereich weist trotz allem noch Lichtintensitäten von mehr als 50 % auf. Damit können noch bis zu einem zweiten Arbeitsabstand 146 Messungen durchgeführt werden. Darüber hinaus ergibt sich zwischen dem ersten Arbeitsabstand 144 und dem zweiten Arbeitsabstand 146 ein Zwischenbereich 148, in dem ebenfalls gearbeitet werden kann. So ist ein kontinuierlicher Entfernungsübergang zwischen dem ersten Arbeitsabstand 144 und dem zweiten Arbeitsabstand 146 möglich. Somit ist das Arbeiten über einen relativ großen Abstandsbereich mittels des optischen Sensors 220 möglich.

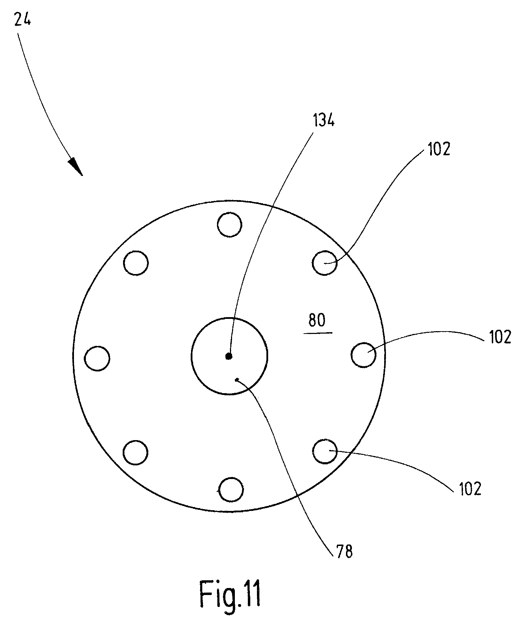

In der Fig. 11 ist letztlich erläuternd eine Querschnittsansicht entlang einer Linie XI-XI in Fig. 10 dargestellt. Zu erkennen ist die rotationssymmetrische Anordnung der Lichtquellen 102 der Beleuchtungsanordnungen 88 rotationssymmetrisch zu der Rotationssymmetrieachse 134. Die Lichtquellen 102 sind dabei in dem Randbereich 80 angeordnet. Der optische Sensor 22 kann das Werkstück dabei durch den freien Mittenbereich 78 beobachten.

**Patentansprüche**

1. Beleuchtungsmodul (24) für ein Koordinatenmessgerät zum Vermessen eines Werkstücks (18) mittels eines optischen Sensors (22), wobei das Beleuchtungsmodul (24) einen Grundkörper (61) mit einer Sensorseite (62) und einer Werkstückseite (64) aufweist, wobei das Beleuchtungsmodul (24) an dem Grundkörper (61) mindestens eine Beleuchtungsanordnung (88, 104, 106) zum Beleuchten des Werkstücks (18) aufweist, und wobei die mindestens eine Beleuchtungsanordnung (88, 104, 106) eine Abstrahlcharakteristik (126, 130) mit einem Abstrahlwinkel (130) und einem Lichtintensitätsverlauf (126) innerhalb des Abstrahlwinkels (130) aufweist, wobei der Lichtintensitätsverlauf (126) der mindestens einen Beleuchtungsanordnung (88, 104, 106) innerhalb des Abstrahlwinkels (130) asymmetrisch ist, **dadurch gekennzeichnet, dass** die Abstrahlcharakteristik (126, 130) jeder Beleuchtungsanordnung (88, 104, 106) derart moduliert ist, dass sie einen ersten Teilbereich (152) und einen zweiten Teilbereich (154) aufweist, wobei zwischen dem ersten Teilbereich (152) und dem zweiten Teilbereich (154) ein Schattenbereich (142) ist, und wobei die ersten Teilbereiche (152) der mindestens einen Beleuchtungsanordnung (88, 104, 106) in einem ersten Arbeitsbereich (138) und zweiten Teilbereiche (154) der mindestens einen Beleuchtungsanordnung (88, 104, 106) in einem zweiten Arbeitsbereich (140) zusammenfallen, und dass die mindestens eine Beleuchtungsanordnung (88, 104, 106) jeweils mindestens ein optisches Element (90, 92, 93, 94, 103, 136, 150) aufweist, das die Abstrahlcharakteristik (126, 130) der jeweiligen Beleuchtungsanordnung (88, 104, 106) moduliert.

2. Beleuchtungsmodul nach Anspruch 1, **dadurch gekennzeichnet, dass** der Lichtintensitätsverlauf der mindestens einen Beleuchtungsanordnung (88, 104, 106) asymmetrisch zu einer Richtung einer maximalen Lichtintensität der Beleuchtungsanordnung (88, 104, 106) ist.

3. Beleuchtungsmodul nach Anspruch 1 oder 2, **dadurch gekennzeichnet, dass** die mindestens eine Beleuchtungsanordnung (88, 104, 106) mindestens einen Lichtleiter (89, 103) aufweist, und wobei das mindestens eine optische Element (90, 92, 93, 94, 103, 136, 150) an einem werkstückseitigen Ende des Lichtleiters (89, 103) angeordnet ist.

4. Beleuchtungsmodul nach Anspruch 1 oder 2, **dadurch gekennzeichnet, dass** die mindestens eine Beleuchtungsanordnung (88, 104, 106) eine Lichtquelle (102) aufweist, und wobei das mindestens eine optische Element (90, 92, 93, 94, 103, 136, 150) eine Abstrahlcharakteristik (126, 130) der Lichtquelle (102) moduliert.

5. Beleuchtungsmodul nach Anspruch 4, **dadurch gekennzeichnet, dass** die mindestens eine Lichtquelle (102) eine LED oder eine OLED oder ein Laser ist.

6. Beleuchtungsmodul nach einem der Ansprüche 1 bis 5, **dadurch gekennzeichnet, dass** das mindestens eine optische Element (90, 92, 93, 94, 103, 136, 150) mindestens ein refraktives optisches Element (90, 103, 136, 150) und/oder mindestens ein diffraktives optisches Element (92) und/oder mindestens ein holografisches optisches Element (94) und/oder mindestens ein reflektierendes optisches Element (93) ist.

7. Beleuchtungsmodul nach einem der Ansprüche 1 bis 6, **dadurch gekennzeichnet, dass** das mindestens eine optische Element (90, 92, 93, 94, 103, 136, 150) ein Prisma (136) aufweist, das in einem Teilbereich des Abstrahlwinkels (130) angeordnet ist.

8. Beleuchtungsmodul nach einem der Ansprüche 1 bis 6, **dadurch gekennzeichnet, dass** das mindestens eine optische Element (90, 92, 93, 94, 103, 136, 150) eine Meniskuslinse (150) aufweist, die in dem gesamten Abstrahlwinkel (130) angeordnet ist.

9. Beleuchtungsmodul nach einem der Ansprüche 1 bis 8, **dadurch gekennzeichnet, dass** die Sensorseite (62) eine erste Schnittstelleneinrichtung (58) zum sensorseitigen Koppeln des Beleuchtungsmoduls (24) in einer definierten Lage aufweist.

10. Beleuchtungsmodul nach einem der Ansprüche 1 bis 9, **dadurch gekennzeichnet, dass** der Grundkörper (61) die Form eines Rings mit einem freien Zentralbereich (78) und einem Randbereich (80) aufweist, wobei die mindestens eine Beleuchtungsanordnung (88, 104, 106) in dem Randbereich (80) auf der Werkstückseite (64) angeordnet ist.

11. Beleuchtungsmodul nach einem der Ansprüche 1 bis 9, **dadurch gekennzeichnet, dass** das Beleuchtungsmodul (24) eine Mehrzahl von Beleuchtungsanordnungen (88, 104, 108) aufweist, die an der Werkstückseite (64) des Grundkörpers (61) rotationssymmetrisch zu einer Rotationssymmetrieachse (134) angeordnet sind, wobei jede Beleuchtungsanordnung (88, 104, 106) eine Richtung maximaler Lichtintensität (128) aufweist, und wobei die Beleuchtungsanordnungen (88, 104, 106) derart ausgerichtet sind, dass sich die Richtungen maximaler Lichtintensität (128) in einem ersten Punkt (135) schneiden, der auf der Rotationssymmetrieachse (134) liegt.

12. Koordinatenmessgerät (10) zum Vermessen eines Werkstücks (18) mittels eines optischen Sensors (22), **gekennzeichnet durch** ein Beleuchtungsmodul (24) nach einem der Ansprüche 1 bis 11, und wobei ein Messkegel (132) des optischen Sensors (22) entlang der Rotationssymmetrieachse (134) verläuft.

**Claims**

1. Illumination module (24) for a coordinate measuring machine for measuring a workpiece (18) by means of an optical sensor (22), wherein the illumination module (24) comprises a main body (61) having a sensor side (62) and a workpiece side (64), wherein the illumination module (24) comprises on the main body (61) at least one illumination arrangement (88, 104, 106) for illuminating the workpiece (18), and wherein the at least one illumination arrangement (88, 104, 106) has an emission characteristic (126, 130) with an emission angle (130) and a light intensity profile (126) within the emission angle (130), wherein the light intensity profile (126) of the at least one illumination arrangement (88, 104, 106) within the emission angle (130) is asymmetrical, **characterized in that in that** the emission characteristic (126, 130) of each illumination arrangement (88, 104, 106) is modulated in such a way that it has a first partial region (152) and a second partial region (154), wherein there is a shadow region (142) between the first partial region (152) and the second partial region (154), and wherein the first partial regions (152) of the at least one illumination arrangement (88, 104, 106) coincide in a first working region (138) and second partial regions (154) of the at least one illumination arrangement (88, 104, 106) coincide with a second working region (140), and **in that** the at least one illumination arrangement (88, 104, 106) has in each case at least one optical element (90, 92, 93, 94, 103, 136, 150) which modulates the emission characteristic (126, 130) of the respective illumination arrangement (88, 104, 106).

2. Illumination module according to Claim 1, **characterized in that** the light intensity profile of the at least one illumination arrangement (88, 104, 106) is asymmetrical with respect to a direction of a maximum light intensity of the illumination arrangement (88, 104, 106).

3. Illumination module according to Claim 1 or 2, **characterized in that** the at least one illumination arrangement (88, 104, 106) has at least one optical waveguide (89, 103), and wherein the at least one optical element (90, 92, 93, 94, 103, 136, 150) is arranged at a workpiece-side end of the optical waveguide (89, 103).

4. Illumination module according to Claim 1 or 2, **characterized in that** the at least one illumination arrangement (88, 104, 106) has a light source (102), and wherein the at least one optical element (90, 92, 93, 94, 103, 136, 150) modulates an emission characteristic (126, 130) of the light source (102).

5. Illumination module according to Claim 4, **characterized in that** the at least one light source (102) is an LED or an OLED or a laser.

6. Illumination module according to any of Claims 1 to 5, **characterized in that** the at least one optical element (90, 92, 93, 94, 103, 136, 150) is at least one refractive optical element (90, 103, 136, 150) and/or at least one diffractive optical element (92) and/or at least one holographic optical element (94) and/or at least one reflective optical element (93).

7. Illumination module according to any of Claims 1 to 6, **characterized in that** the at least one optical element (90, 92, 93, 94, 103, 136, 150) has a prism (136) arranged in a partial region of the emission angle (130).

8. Illumination module according to any of Claims 1 to 6, **characterized in that** the at least one optical element (90, 92, 93, 94, 103, 136, 150) has a meniscus lens element (150) arranged in the entire emission angle (130).

9. Illumination module according to any of Claims 1 to 8, **characterized in that** the sensor side (62) has a first interface device (58) for the sensorside coupling of the illumination module (24) in a defined position.

10. Illumination module according to any of Claims 1 to 9, **characterized in that** the main body (61) has the form of a ring having a free central region (78) and an edge region (80), wherein the at least one illumination arrangement (88, 104, 106) is arranged in the edge region (80) on the workpiece side (64).

11. Illumination module according to any of Claims 1 to 9, **characterized in that** the illumination module (24) comprises a plurality of illumination arrangements (88, 104, 106) arranged on the workpiece side (64) of the main body (61) rotationally symmetrically with respect to an axis (134) of rotational symmetry, wherein each illumination arrangement (88, 104, 106) has a direction of maximum light intensity (128), and wherein the illumination arrangements (88, 104, 106) are aligned in such a way that the directions of maximum light intensity (128) intersect at a first point (135) lying on the axis (134) of rotational symmetry.

12. Coordinate measuring machine (10) for measuring a workpiece (18) by means of an optical sensor (22), **characterized by** an illumination module (24) according to any of Claims 1 to 11, and wherein a measurement cone (132) of the optical sensor (22) runs along the axis (134) of rotational symmetry.

**Revendications**

1. Module d'éclairage (24) destiné à un appareil de mesure de coordonnées pour mesurer une pièce à usiner (18) au moyen d'un capteur optique (22), dans lequel le module d'éclairage (24) comporte un corps de base (61) ayant un côté capteur (62) et un côté pièce à usiner (64), dans lequel le module d'éclairage (24) comporte, sur le corps de base (61), au moins un dispositif d'éclairage (88, 104, 106) pour éclairer la pièce à usiner (18), et dans lequel l'au moins un dispositif d'éclairage (88, 104, 106) présente une caractéristique de rayonnement (126, 130) ayant un angle de rayonnement (130) et une courbe d'intensité lumineuse (126) à l'intérieur de l'angle de rayonnement (130), dans lequel la courbe d'intensité lumineuse (126) de l'au moins un dispositif d'éclairage (88, 104, 106) est asymétrique à l'intérieur de l'angle de rayonnement (130), **caractérisé en ce que** la caractéristique de rayonnement (126, 130) de chaque dispositif d'éclairage (88, 104, 106) est modulée de manière à présenter une première section (152) et une seconde section (154), dans lequel une zone d'ombre (142) est présente entre la première section (152) et la seconde section (154), les premières sections (152) de l'au moins un dispositif d'éclairage (88, 104, 106) coïncident dans une première zone de travail (138) et secondes sections (154) de l'au moins un dispositif d'éclairage (88, 104, 106) coïncident dans une seconde zone de travail (140), et **en ce que** l'au moins un dispositif d'éclairage (88, 104, 106) comporte respectivement au moins un élément optique (90, 92, 93, 94, 103, 136, 150), qui module la caractéristique de rayonnement (126, 130) du dispositif d'éclairage (88, 104, 106) respectif.

2. Module d'éclairage selon la revendication 1, **caractérisé en ce que** la courbe d'intensité lumineuse de l'au moins un dispositif d'éclairage (88, 104, 106) est asymétrique par rapport à une direction d'une intensité lumineuse maximale du dispositif d'éclairage (88, 104, 106).

3. Module d'éclairage selon la revendication 1 ou 2, **caractérisé en ce que** l'au moins un dispositif d'éclairage (88, 104, 106) comporte au moins un diviseur de lumière (89, 103), et dans lequel l'au moins un élément optique (90, 92, 93, 94, 103, 136, 150) est disposé sur une extrémité située sur le côté pièce à usiner du diviseur de lumière (89, 103).

4. Module d'éclairage selon la revendication 1 ou 2, **caractérisé en ce que** l'au moins un dispositif d'éclairage (88, 104, 106) comporte une source lumineuse (102), et dans lequel l'au moins un élément optique (90, 92, 93, 94, 103, 136, 150) module une caractéristique de rayonnement (126, 130) de la source lumineuse (102).

5. Module d'éclairage selon la revendication 4, **caractérisé en ce que** l'au moins une source lumineuse (102) est une LED ou une OLED ou un laser.

6. Module d'éclairage selon l'une quelconque des revendications 1 à 5, **caractérisé en ce que** l'au moins un élément optique (90, 92, 93, 94, 103, 136, 150) est au moins un élément optique réfractant (90, 103, 136, 150) et/ou au moins un élément optique diffractant (92) et/ou au moins un élément optique holographique (94) et/ou au moins un élément optique réfléchissant (93).

7. Module d'éclairage selon l'une quelconque des revendications 1 à 6, **caractérisé en ce que** l'au moins un élément optique (90, 92, 93, 94, 103, 136, 150) comporte un prisme (136) qui est disposé dans une section de l'angle de rayonnement (130).

8. Module d'éclairage selon l'une quelconque des revendications 1 à 6, **caractérisé en ce que** l'au moins un élément optique (90, 92, 93, 94, 103, 136, 150) comporte une lentille ménisque (150) qui est disposée sur la totalité de l'angle de rayonnement (130).

9. Module d'éclairage selon l'une quelconque des revendications 1 à 8, **caractérisé en ce que** le côté capteur (62) comporte à une position définie un premier dispositif d'interface (58) destiné au couplage côté capteur du module d'éclairage (24).

10. Module d'éclairage selon l'une quelconque des revendications 1 à 9, **caractérisé en ce que** le corps de base (61) présente la forme d'une bague ayant une zone centrale libre (78) et une zone périphérique (80), dans lequel l'au moins un dispositif d'éclairage (88, 104, 106) est disposé dans la zone périphérique (80) sur le côté pièce à usiner (64).

11. Module d'éclairage selon l'une quelconque des revendications 1 à 9, **caractérisé en ce que** le module d'éclairage (24) comporte une pluralité de dispositifs d'éclairage (88, 104, 106) qui sont disposés de manière symétrique de rotation sur le côté pièce à usiner (64) du corps de base (61) par rapport à un axe de symétrie de rotation (134), dans lequel chaque dispositif d'éclairage (88, 104, 106) présente une direction d'intensité lumineuse maximale (128), et dans lequel les dispositifs d'éclairage (88, 104, 106) sont orientés de manière à ce que les directions d'intensité lumineuse maximale (128) se coupent en un premier point (135) qui se situe sur l'axe de symétrie de rotation (134).

12. Appareil de mesure de coordonnées (10) destiné à mesurer une pièce à usiner (18) au moyen d'un capteur optique (22), **caractérisé par** un module d'éclairage (24) selon l'une quelconque des revendications 1 à 11, et dans lequel un cône de mesure (132) du capteur optique (22) s'étend le long de l'axe de symétrie de rotation (134).

Fig.1

Fig.2

Fig.3

Fig.4

Fig.5a

Fig.5b

Fig.5c

Fig.6

Fig.7

Fig.8

Fig.9

Fig.10

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0362625 A2
- DE 102009009599 A1
- EP 0969304 A2
- DE 102006018410 A1
- EP 0385262 A2
- EP 1373827 B1